# EUROPÄISCHE PATENTSCHRIFT

(11) **EP 0 494 194 B1**
(45) Veröffentlichungstag und Bekanntmachung des Hinweises auf die Patenterteilung: **28.12.1994**
(21) Anmeldenummer: 90914146.7
(22) Anmeldetag: 13.09.1990
(51) Int. Cl.: B60T 8/00, B60K 28/16

(54) **BREMSDRUCKREGELSYSTEM**
BRAKE PRESSURE REGULATING SYSTEM
SYSTEME DE REGULATION DE PRESSION DE FREINAGE

(30) Priorität: 29.09.1989 DE 3932569
(43) Veröffentlichungstag der Anmeldung: 15.07.1992
(73) Patentinhaber: ROBERT BOSCH GMBH, 70442 Stuttgart (DE)
(72) Erfinder: SIGL, Alfred, D-7126 Sersheim (DE)
(86) Internationale Anmeldenummer: EP9001555
(87) Internationale Veröffentlichungsnummer: WO9104890

(56) Entgegenhaltungen:
- DE-A- 3 638 837

## Beschreibung

### Stand der Technik

Ein Bremsdruckregelsystem mit den Merkmalen des Oberbegriffs des Anspruch 1 oder 2 ist aus der WO 83/032 30 bekannt. Es handelt sich dort um einen Bremsdruckregler, bei dem vom Fahrer eine Fahrzustandsgröße z.B. die Fahrzeugverzögerung durch Pedaldruck vorgegeben wird. Der Regler regelt dann auf diese Fahrzeugverzögerung. Dabei werden die gemessenen Radlasten mit verarbeitet. Die bei diesem Bremsdruckregelsystem benötigte Fahrzeuglängsverzögerung wird durch einen gesonderten Verzögerungsmesser ermittelt.

### Vorteile der Erfindung

Durch die erfindungsgemäßen Lehren gemäß den Patentansprüchen 1 und 2 werden die Fahrzeuglängsverzögerung und/oder die Fahrzeugquerbeschleunigung ohne besondere Geber gewonnen. Dabei wird unterstellt, daß die Geber zur Feststellung der Lastverteilungen aus anderen Gründen vorhanden sind (z.B. Niveauregelung). Die Lasten können z.B. aus dem Einfederweg ermittelt werden.

Die Längsverzögerung wird bei dem oben geschilderten Bremsdruckregler für die Regelung benötigt. Bei Antiblockierreglern oder Antischlupfreglern wird die Fahrzeugverzögerung z.B. zur Bestimmung der Steigung der Referenzgröße insb. bei Allradantrieb mit Sperren oder bei ABS auch zur Überprüfung der Anlage auf Wirkung des ABS benötigt.

Die Erkennung einer Kurve und das Vorliegen einer bestimmten Querbeschleunigung ist z.B. bei ABS und Verwendung einer Giermomentenaufbauverzögerung (GMA) notwendig, um im Kurvengrenzgeschwindigkeitsbereich die GMA abzuschalten.

### Figurerenbeschreibung

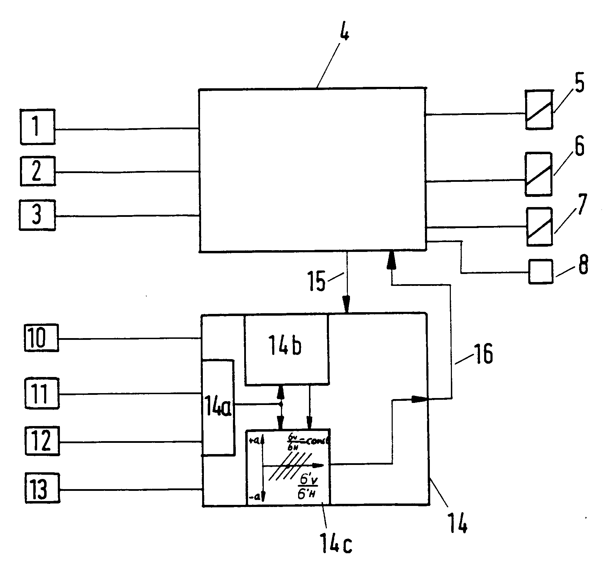

Anhand der Zeichnung wird ein Ausführungsbeispiel der Erfindung erläutert. Dort sind mit 1 bis 3 die Radgeschwindigkeitssensoren eines kombinierten ABS/ASR bezeichnet.

Eine Auswerteschaltung der Systeme trägt das Bezugszeichen 4. Mit 5 bis 7 sind Bremsdrucksteuerventile bezeichnet, die in ABS und ASR-Fall zur Einsteuerung von Bremsdruck verwendet werden. Mit 8 ist ein Beeinflußungsglied für das Motormoment bezeichnet.

Mit Sensoren 10 bis 13 werden die Lasten an den einzelnen Rädern ermittelt und an eine Auswerteschaltung 14 gegeben. In dieser werden mittels eines Blocks 14a die Radlasten achsweise zusammengefaßt. Bei Fahrzeugstillstand oder bei Fahrt ohne Bremsung wird ein erstes statisches Achslastverhältnis Gᵥ/Gₕ ermittelt und in einem Speicher 14b abgespeichert. Beim Bremsen (mitgeteilt über Leitung 15) wird dann ein zweites dynamisches Achslastverhältnis Gᵥ'/Gₙ' ermittelt. Beide Achslastverhältnisse werden dann einem Block 14c zugeführt, in dem ein für das Fahrzeug spezifisches Kennlinienfeld "dynamisches Achslastverhältnis in Abhängigkeit vom statischen Achslastverhältnis mit der Fahrzeugverzögerung als Parameter" abgespeichert ist. Der aufgrund der ermittelten Achslastverhältnisse erhaltene wert für die Fahrzeugverzögerung wird über eine Leitung 16 die Auswerteschaltung 4 z.B. zur Bestimmung der Steigung der Referenzgröße zugeführt.

Bei der Bestimmung der Querbeschleunigung werden die Lasten im Block 14a seitenweise zusammengefaßt und es wird im übrigen ähnlich wie oben erläutert, aus den Änderungen der Verteilungsverhältnisse die Querbeschleunigung aq gewonnen, die z.B. zur Abschaltung der GMA der Auswerteschaltung 4 zugeführt wird. In diesem Fall ist ein Kennlinienfeld "dynamisches Seitenlastverhältnis in Abhängigkeit von dem statischen Seitenlastverhältnis mit aq als Parameter" in 14c gespeichert.

## Patentansprüche

1. ABS- und/oder ASR-Regelsystem für ein Fahrzeug mit Regelung des Bremsdrucks, bei dem zusätzlich die Radlasten und/oder die Achslasten ermittelt werden, dadurch gekennzeichnet, daß innerhalb einer Auswerteelektronik ein Kennlinienfeld abgespeichert ist, aus dem sich bei bekannter statischer Achslastverteilung und der Achslastverteilung beim Bremsen die zugehörige Fahrzeuglängsverzögerung ergibt und daß die so ermittelte Fahrzeuglängsverzögerung zur Verbesserung der Regelung des ABS- und/oder ASR-Regelsystems ausgenutzt ist.

2. ABS- und/oder ASR-Regelsystem für ein Fahrzeug mit Regelung des Bremsdrucks, bei dem zusätzlich die Radlasten und/oder die Achslasten ermittelt werden, dadurch gekennzeichnet, daß innerhalb einer Auswerteelektronik ein Kennlinienfeld abgespeichert ist, aus dem sich bei bekannter statischer Verteilung der Last auf den Rädern der Fahrzeugseiten und der Änderung dieser Verteilung die zugehörige Querbeschleunigung bestimmten läßt und daß die so ermittelte Fahrzeugquerbeschleunigung zur Verbesserung der Regelung des ABS- und/oder ASR-Regelsystems ausgenutzt ist.

## Claims

1. Anti-locking system and/or anti-slip control system with brake pressure control for a vehicle in which, in addition, the wheel loads and/or the axle loads are determined, characterised by the fact that within an electronic evaluation system, a characteristic curve field is stored from which, when the static axle load distribution and the axle load distribution on braking is known, the appropriate vehicle linear deceleration results, and that the vehicle linear deceleration thus determined is used for the improvement of the control of the brake pressure controller.

2. Anti-locking system and/or anti-slip control system with brake pressure control for a vehicle in which, in addition, the wheel loads and/or the axle loads are determined, characterised by the fact that within an electronic evaluation system, a characteristic curve field is stored from which, when the static distribution of the load on the wheels of the vehicle sides and the change in this distribution is known, the appropriate transverse acceleration can be determined, and that the vehicle transverse acceleration thus determined is used for the improvement of the control of the brake pressure control system.

## Revendications

1. Système de régulation ABS et/ou ASR pour un véhicule équipé d'une régulation de la pression de frein pour lequel en plus on détermine la charge des roues et/ou la charge des essieux, caractérisé en ce qu'un champ de caractéristiques est mis en mémoire dans un circuit d'exploitation, champ qui donne pour une répartition connue, statique des charges d'essieu et une répartition des charges d'essieu au freinage, la décélération longitudinale correspondante du véhicule et cette décélération longitudinale ainsi obtenue est utilisée pour améliorer la régulation assurée par le système de régulation ABS et/ou ASR.

2. Système de régulation ABS et/ou ASR pour un véhicule à régulation de la pression de frein pour lequel en plus on détermine la charge des roues et/ou la charge des essieux, système caractérisé en ce qu'un champ de caractéristiques est mis en mémoire dans un circuit électronique d'exploitation, qui permet de déterminer l'accélération transversale correspondante à partir de la répartition statique connue de la charge sur les roues des côtés du véhicule et la variation de cette répartition, et cette accélération transversale ainsi obtenue est utilisée pour améliorer la régulation du système ABS et/ou ASR.
